# EUROPÄISCHE PATENTSCHRIFT

(11) **EP 3 366 554 B1**
(45) Veröffentlichungstag und Bekanntmachung des Hinweises auf die Patenterteilung: **16.10.2019**
(21) Anmeldenummer: 17158015.2
(22) Anmeldetag: 25.02.2017
(51) Int. Cl.: B62H 3/12, A63C 11/02, B65G 9/00

(54) **AUFHÄNGEVORRICHTUNG FÜR TRANSPORTGERÄTE**
SUSPENSION DEVICE FOR TRANSPORT DEVICES
DISPOSITIF DE SUSPENSION POUR APPAREILS DE TRANSPORT

(43) Veröffentlichungstag der Anmeldung: 29.08.2018
(73) Patentinhaber: Gretsch, Urs, 8125 Zollikerberg (CH)
(72) Erfinder: Gretsch, Urs, 8125 Zollikerberg (CH)
(74) Vertreter: Rutz & Partner

(56) Entgegenhaltungen:
- CH-A2- 706 067
- DE-A1- 2 612 623
- DE-A1-102012 009 367

## Beschreibung

Aufhängevorrichtung insbesondere für Transportgeräte, wie Velos, Skis, Snowboards.

Insbesondere im öffentlichen Raum, an Bahnhöfen, in Schulen oder Gasthäusern, oder auch in Mehrfamilienhäusern wird regelmässig eine geordnete Lagerung von Transportgeräten auf engem Raum gewünscht.

Die CH706067A2, die alle Merkmale des Oberbegriffs des Anspruchs 1 zeigt, offenbart zu diesem Zweck eine Aufhängevorrichtung mit Aufnahmevorrichtungen, die der Aufnahme und dem Halten je eines Transportgeräts dienen. Jede Aufnahmevorrichtung umfasst ein Laufwerk, welches in einer z.B. an einer Decke montierten Führungsschiene verschiebbar gelagert und durch Verbindungselemente mit einem Haltekörper verbunden ist. Am Haltekörper ist ein Haken montiert, in den das Transportgerät eingehängt und anschliessend mit der Aufnahmevorrichtung entlang der Führungsschiene in eine Parkposition verschoben werden kann.

Damit die Aufnahmevorrichtung im belasteten Zustand, d.h. nach dem Beladen mit einem Transportgerät, verschiebbar ist und im unbelasteten Zustand, d.h. nach dem Entladen des Transportgeräts, an einer Aufnahmeposition festgehalten bleibt, ist eine Bremsvorrichtung vorgesehen. Die Bremsvorrichtung umfasst auf dem Haltekörper vorgesehene Bremsklötze, die nach dem Entladen der zugehörigen Aufnahmevorrichtung mit dem Haltekörper gegen die Führungsschiene verschoben werden. Dazu sind zwischen den Verbindungselementen und dem Haltekörper Federelemente vorgesehen, die beim Beladen der Aufnahmevorrichtung komprimiert werden, sodass sich die Bremsklötze von der Führungsschiene lösen, und die beim Entladen der Aufnahmevorrichtung expandieren und den Haltekörper mit den Bremsklötzen gegen die Führungsschiene verschieben.

Diese Lösung ist mit verschiedenen Nachteilen behaftet. Die Bremsklötze bestehen aus einem elastischen Material, normalerweise aus einem Kunststoff und sind somit einem Verschleiss ausgesetzt. Ferner können die Bremsklötze verschmutzen, sodass keine optimale Bremswirkung eintritt und die Handhabung der Aufnahmevorrichtung erschwert wird. D.h., die Aufnahmevorrichtung kann sich beim Einhängen des Transportgeräts verschieben, sodass dieser Vorgang verhindert oder verunmöglicht wird. Damit die Bremswirkung eintritt, ist eine entsprechende Federkraft des Federelements erforderlich. Sobald die Feder ermüdet, ist die gewünschte Funktion nicht mehr gegeben. Zu beachten ist ferner, dass das einwandfreie Funktionieren der Vorrichtung insbesondere an Bahnhöfen besonders wichtig ist, da die Benutzer zu bestimmten Zeitpunkten jeweils in hoher Zahl auftreten und die Parkierungsabläufe daher rasch vollzogen werden müssen. Zu beachten ist ferner, dass Vorrichtungen in öffentlichen Räumen oft Vandalenakten ausgesetzt sind und somit gegen solche Einwirkungen geschützt werden müssen. Die freiliegenden elastischen Bremsklötze können daher einen kritischen Angriffspunkt für solche Einwirkungen bilden.

Diese bekannte Aufhängevorrichtung erfordert daher einen erheblichen Wartungsaufwand, der mit entsprechenden Kosten verbunden ist.

Der vorliegenden Erfindung liegt somit die Aufgabe zugrunde, eine verbesserte Aufhängevorrichtung insbesondere für Transportgeräte zu schaffen, welche nicht mit den vorgenannten Mängeln behaftet ist.

Insbesondere ist eine weitgehend wartungsfreie Aufhängevorrichtung zu schaffen, deren Vorrichtungsteile kaum einem Verschleiss unterworfen sind. Die Vorrichtungsteile sollen auch nach längerem Gebrauch ihre Funktion unverändert erfüllen und keine Alterungserscheinungen aufweisen. Die Vorrichtungsteile sollen durch mechanische und chemische Einwirkungen in ihrer Funktion nicht beeinträchtigt werden und hinsichtlich Vandalenakten keine relevanten Angriffsflächen aufweisen. Die Aufhängevorrichtung soll nach der Installation über lange Zeit auch bei unvorteilhaften Umgebungsbedingungen ihre Funktion unverändert aufrechterhalten und keine Wartungsarbeiten erfordern.

Diese Aufgabe wird mit einer Aufhängevorrichtung gemäss Anspruch 1 gelöst. Vorteilhafte Ausgestaltungen des Eisenbahnzugs und des Eisenbahnwagens sind in weiteren Ansprüchen angegeben.

Die insbesondere für Transportgeräte oder Sportgeräte vorgesehene Aufhängevorrichtung umfasst eine Führungsschiene, mittels der wenigstens eine Aufnahmevorrichtung von einer Aufnahmeposition zu einer Parkposition verschiebbar gehalten ist. Die Aufnahmevorrichtung umfasst ein in der Führungsschiene verschiebbar gelagertes Laufwerk mit einem Laufwerkskörper, der durch wenigstens ein Verbindungselement mit einem Haltekörper verbunden ist, der entlang dem wenigstens einen Verbindungselement aus einer unteren Endlage gegen die Führungsschiene in eine obere Endlage verschiebbar ist und der mit einer Haltevorrichtung verbunden ist, die der Aufnahme und dem Halten des Transportgeräts dient. Beispielsweise umfasst die Haltevorrichtung ein hakenförmiges Aufnahmeteil oder eine Klemmvorrichtung.

Erfindungsgemäss ist der Haltekörper mit wenigstens einem Magneten versehen, der in der oberen Endlage des Haltekörpers mit der Führungsschiene magnetisch koppelbar bzw. gekoppelt ist.

Nach dem Entladen der Aufnahmevorrichtung ist der Haltekörper daher gegen die Führungsschiene verschoben und mit dieser gekoppelt und somit ortsfest fixiert. Beim Beladen der Aufnahmevorrichtung mit der Transportvorrichtung wirkt die Gewichtskraft des Sportgeräts und gegebenenfalls eine Zugkraft des Anwenders auf den Haltekörper ein, sodass sich der Haltekörper mit den wenigstens einen Magneten von der Führungsschiene löst und die beladene Aufnahmevorrichtung entlang der Führungsschiene verschoben werden kann.

Sofern für das Lösen der Aufnahmevorrichtung eine Zugkraft des Anwenders erforderlich ist, so kann die Aufnahmevorrichtung an beliebigen Punkten entlang der Laufschiene fixiert und wieder gelöst werden. Ansonsten kann zusätzlich eine Arretiervorrichtung gesehen sein, die es erlaubt, die beladene Aufnahmevorrichtung an einer beliebigen Stelle zu arretieren. Dazu kann ein Arretierbolzen vorgesehen werden, der in eine Ausnehmung in der Führungsschiene einschiebbar ist, die dazu eine entsprechende Rasterung oder eine Serie von Lochungen aufweist.

Durch den oder die Magneten wird eine zuverlässige Verbindung zwischen der Aufnahmevorrichtung und der Führungsschiene erstellt, sodass ein seitliches Verschieben der entladenen Aufnahmevorrichtung verhindert wird.

Die Vorrichtung ist völlig wartungsfrei und funktioniert über die gesamte Laufzeit unverändert. Chemische Einwirkungen, Verschmutzung und Materialveränderungen, wie Oxidation, bleiben ohne wesentlichen Einfluss auf die Funktion der Aufnahmevorrichtungen. Die vorzugsweise in die Haltekörper eingebetteten Magneten sind stabil aufgebaut und unterliegen keinem Verschleiss. Vorzugsweise werden Magneten verwendet, die aus einem hartmagnetischen Metall bzw. einer hartmagnetischen Legierung bestehen. Die Herstellung und mögliche Zusammensetzungen solcher Magneten sind z.B. in DE19952619A1 oder in DE10310572A1 offenbart.

Zur Verbindung des Laufwerkskörpers und des Haltekörpers sind vorzugsweise eines oder mehrere Verbindungselemente in der Ausgestaltung einer Gewindestange oder eines Bolzens vorgesehen, der einen mit einem Gewinde versehenen Bolzenschaft und einen Bolzenkopf aufweist. Die Gewindestange oder der Bolzenschaft sind in einem Führungskanal im Haltekörper verschiebbar gehalten und in eine Gewindebohrung im Laufwerkskörper des in der Führungsschiene geführten Laufwerks eingedreht. In der unteren Endlage wird der Haltekörper vom Bolzenkopf oder von einer Schraubenmutter gehalten, die auf die Gewindestange aufgesetzt ist.

Im teilweise erweiterten Führungskanal ist vorzugsweise ein Federelement, z.B. eine Schraubenfeder, angeordnet, die einerseits am Verbindungselement bzw. am Bolzenkopf oder der Schraubenmutter und andererseits am Haltekörper anliegt und diesen gegen die Führungsschiene drückt. Nach dem Entladen der Aufnahmevorrichtung wird der Haltekörper mittels des Federelements gegen die Führungsschiene geführt und kann dort magnetisch an die Führungsschiene ankoppeln.

Der wenigstens eine Magnet sitzt vorzugsweise an der Oberseite des Haltekörpers oder ist in einer Ausnehmung im Haltekörper gelagert, deren Abmessungen den Abmessungen des Magneten oder einem Teil davon entsprechen oder etwas grösser sind. Der wenigstens Magnet ist vorzugsweise derart dimensioniert und angeordnet, dass der Magnet und/oder der die Oberseite des Haltekörpers in der oberen Endlage des Haltekörpers an der Unterseite der Führungsschiene anliegen. Der Magnet kann somit minimal in den Haltekörper eingesenkt und mit einer Gussmasse abgedeckt sein, die vorzugsweise ferromagnetisch ausgebildet ist. Auf diese Weise sind die Magneten optimal gegen äussere Einwirkungen geschützt.

In einer vorzugsweisen Ausgestaltung liegt der Magnet mit einem Pol am Haltekörper an und liegt ansonsten frei. Sofern der Magnet innerhalb einer Ausnehmung des Haltekörpers gelagert ist, liegt er vorzugsweise mit einem Pol am Haltekörper an und ist ansonsten vorzugsweise durch einen Luftspalt von weiteren Teilen des Haltekörpers getrennt. Durch die Anordnung eines Luftspalts wird sichergestellt, dass der magnetische Fluss von einem zum anderen Pol des Magneten durch die Führungsschiene geführt wird und ein direkter Rückschluss über den Haltekörper weitgehend vermieden wird.

Der wenigstens eine gegebenenfalls in einem Metallbecher angeordnete Magnet kann auf verschiedene Arten montiert werden. Der Magnet kann durch eine Montageschraube mit dem Haltekörper verbunden werden, der dazu eine entsprechende Gewindebohrung aufweist. In vorzugsweisen Ausgestaltungen wird vorgesehen, dass der Magnet in der Höhe justiert werden kann. Dazu kann der Magnet fest mit der Montageschraube verbunden und bei einer Drehung der Montageschraube in der Höhe justiert werden, um eine gewünschte Ankopplung an die Führungsschiene einzustellen.

Alternativ kann der wenigstens eine Magnet in die Ausnehmung eingesetzt und durch einen Haftstoff oder durch Magnetkraft darin gehalten werden. Da der Magnet stets stärker am Haltekörper anhaftet, als an der Führungsschiene, verbleibt dieser stets in der Ausnehmung. Auf die Verwendung einer Montageschraube oder eines Haftstoffs kann verzichtet werden. Ein allenfalls verbleibender Luftspalt kann vergossen werden, damit das Eindringen von Wasser verhindert wird.

In einer besonders bevorzugten Ausgestaltung wird der vorzugsweise zylinderförmige Magnet derart in einem Hohlzylinder oder zylindrischen Becher angeordnet, dass ein Luftspalt zwischen der Zylinderwand und dem Magneten verbleibt und ein direkter magnetischer Schluss zwischen den Polen des Magneten vermieden wird. Der Magnet kann auch in einem Hohlzylinder oder zylindrischen Becher aus Kunststoff angeordnet werden, dessen Zylinderwand einen magnetisch nicht leitenden Spalt bildet.

Der oder die vorzugsweise zylindrisch oder pillenförmig ausgebildeten Magneten werden zentrisch oder exzentrisch bzw. symmetrisch oder asymmetrisch am Haltekörper angeordnet. Nach dem Entladen der Aufnahmevorrichtung wird der Haltekörper somit exzentrisch von der Führungsschiene und den Magneten gehalten. Sofern die Haltevorrichtung an der anderen Seite des Haltekörpers angeordnet ist und mit einem Gegenstand belastet wird, so lässt sich der Haltekörper aufgrund der Hebelkraft besonders leicht von der Führungsschiene lösen.

Die Magneten können auf verschiedene Weise vorteilhaft angeordnet werden. Die Polachse bzw. Nord-Süd-Achse der Magneten verläuft vorzugsweise senkrecht zur Führungsschiene. Die Magneten können in gleicher Weise oder invers ausgerichtet sein, sodass die Feldlinien jeweils nur einen Magneten umschliessen oder zwei Magneten durchlaufen.

Die Führungsschiene und das Laufwerk können in verschiedenen Ausgestaltungen vorliegen. Das Laufwerk kann einseitig oder beidseitig Gleitelemente oder Rollelemente aufweisen, die in der Führungsschiene geführt sind. Die Führungsschiene kann ein L-Profil mit einem Schienenfuss oder ein nach unten geöffnetes U-Profil mit gegeneinander gerichteten Schienenfüssen aufweisen, die einen Durchgangskanal zur Durchführung des wenigstens einen Verbindungselements begrenzen. Der Schienenfuss oder die Schienenfüsse bilden dabei die Unterseite der Führungsschiene und dienen dem Halten der Gleitelemente oder Rollen des Laufwerks.

In einer vorzugsweisen Ausgestaltung weisen die Oberseite des Haltekörpers und die Unterseite der Führungsschiene zueinander korrespondierende Formelemente auf, die ineinander eingreifen können. Z.B. sind zueinander komplementäre Wellenformen oder Rasterungen vorgesehen. Auf diese Weise resultiert nach dem Entladen der Aufnahmevorrichtung nicht nur eine kraftschlüssige, sondern eine formschlüssige Verbindung zwischen dem Haltekörper und der Führungsschiene. Die Aufnahmevorrichtung bleibt somit auch dann sicher gehalten, wenn Magneten mit reduzierter Magnetkraft verwendet werden.

In einer weiteren vorzugsweisen Ausgestaltung sind die Oberseite des Haltekörpers und/oder die Unterseite der Führungsschiene mit einer Schicht, insbesondere einer Schutzschicht oder einer Dämpfungsschicht beaufschlagt. Beispielsweise wird eine metallische Beschichtung vorgesehen, die der Korrosion des Grundmaterials entgegenwirkt. Alternativ kann eine dünne Kunststoffschicht aufgetragen werden, die gegebenenfalls mit ferromagnetischen Metallpartikeln versehen und daher magnetisch leitfähig ist.

Damit eine gute Ankopplung des Haltekörpers an die Führungsschiene gewährleistet ist, werden Führungsschiene und Haltekörper vorzugsweise aus einem hochwertigen ferromagnetischen Material gefertigt, welches eine gute magnetische Leitfähigkeit aufweist.

Nachfolgend wird die Erfindung anhand von Zeichnungen näher erläutert. Dabei zeigt:
- Fig. 1a: die aus der CH706067A2 bekannte Aufhängevorrichtung 10' mit einer von mehreren Aufnahmevorrichtungen 1', die ein in einer Führungsschiene 6 verfahrbares Laufwerk 2 umfasst, das durch Verbindungselemente 3 mit einem Haltekörper 4' verbunden ist, an dem eine Haltevorrichtung 5 montiert ist, die ein Transportgerät 8 bzw. ein Fahrrad trägt;
- Fig. 1b: die Aufhängevorrichtung 10' von Fig. 1a mit drei Aufnahmevorrichtungen 1A', 1B', 1C';
- Fig. 1c: das Laufwerk 2 von Fig. 1a, mit zwei bolzenförmigen Verbindungselementen 3, entlang denen der Haltekörper 4', auf dem 2 Bremsklötze 45'angeordnet sind, gegen das Laufwerk 2 verschiebbar ist;
- Fig. 2a: eine erfindungsgemässe Aufhängevorrichtung 10 mit einer erfindungsgemässen Aufnahmevorrichtung 1, die einen Haltekörper 4 umfasst, der mit zwei Magneten 45 versehen ist;
- Fig. 2b: die Aufhängevorrichtung 10 mit einem Schnitt durch die Führungsschiene 6 und den Haltekörper 4 entlang der Linie A-A von Fig. 2a;
- Fig. 3: die Aufhängevorrichtung 10 von Fig. 2a in einer Explosionsdarstellung;
- Fig. 4: die Aufhängevorrichtung 10 von Fig. 2a nach der Ankopplung des Haltekörpers 4 an die Führungsschiene 6;
- Fig. 5a: einen Magneten 45 von Fig. 2a, der innerhalb eines Metallbechers 452 angeordnet und derart dimensioniert ist, dass zwischen der Wand des Metallbechers 452 und dem Magneten 45 ein Luftspalt 453 verbleibt; und
- Fig. 5b: den Magneten 45 und den Metallbecher 452 von Fig. 5a in Explosionsdarstellung.

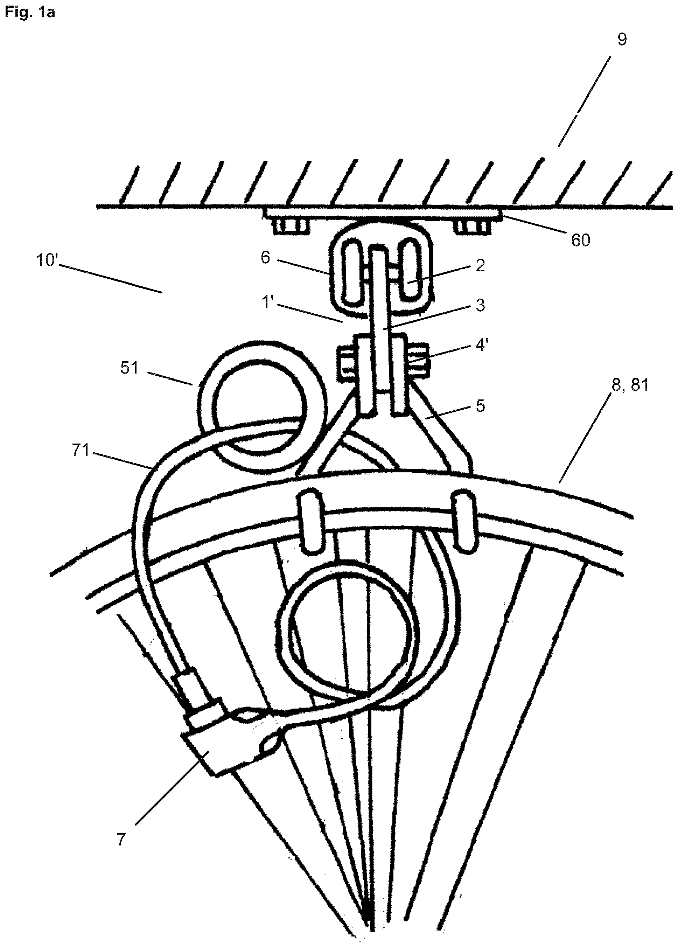

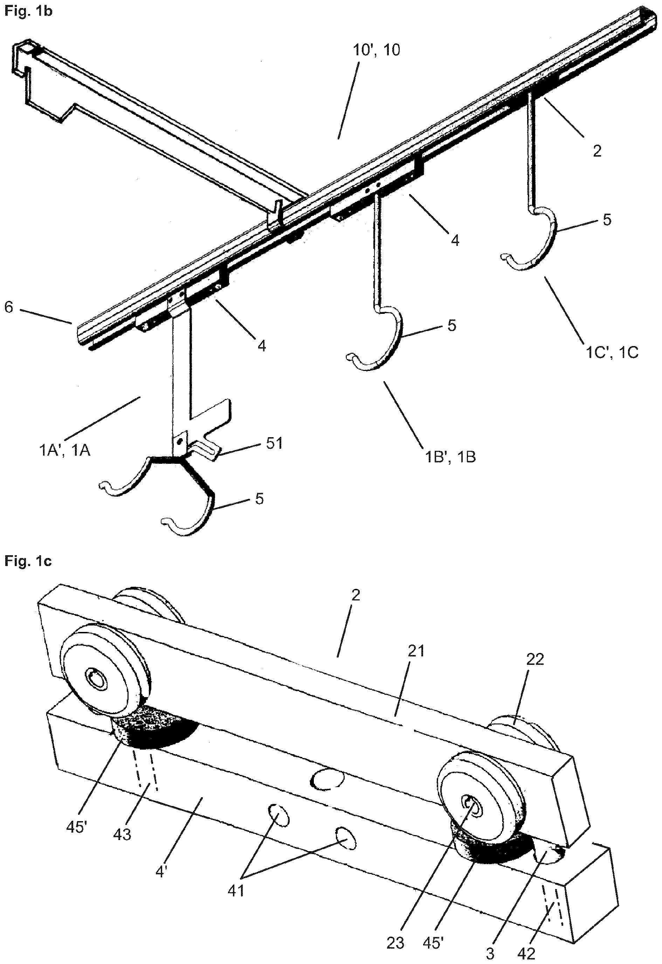

Fig. 1 zeigt die aus der CH706067A2 bekannte Aufhängevorrichtung 10' mit einer Aufnahmevorrichtung 1', die ein in einer Führungsschiene 6 verfahrbares Laufwerk 2 umfasst, das durch Verbindungselemente 3 mit einem Haltekörper 4' verbunden ist. Am Haltekörper 4' ist eine Haltevorrichtung 5 montiert, die ein Transportgerät 8 bzw. ein Fahrrad trägt. Die Haltevorrichtung 5 umfasst zwei Haken, in die das Vorderrad 81 des Fahrrads 8 eingehängt ist. Das Fahrrad 8 ist durch eine Schliessvorrichtung 7 gesichert, welche ein Drahtseil 71 umfasst, das durch das Vorderrad 81 und einen Sicherungsring 51 der Haltevorrichtung 5 geführt ist. Die Führungsschiene 6 ist mittels einer Montageplatte 60 an der Decke 9 eines Gebäudes montiert.

Erfindungsgemässe Führungsschienen 6 können z.B. auch von Gestellen beidseits gehalten oder anderweitig, z.B. an Wänden, montiert werden.

Das Fahrrad 8 kann in einfacher Weise in die Aufnahmevorrichtung 1' bzw. die Haltevorrichtung 5 eingehängt und anschliessend in eine Parkposition verschoben werden, wonach die nächste Aufnahmevorrichtung 1' mit einem weiteren Transportgerät 8 bestückt werden kann.

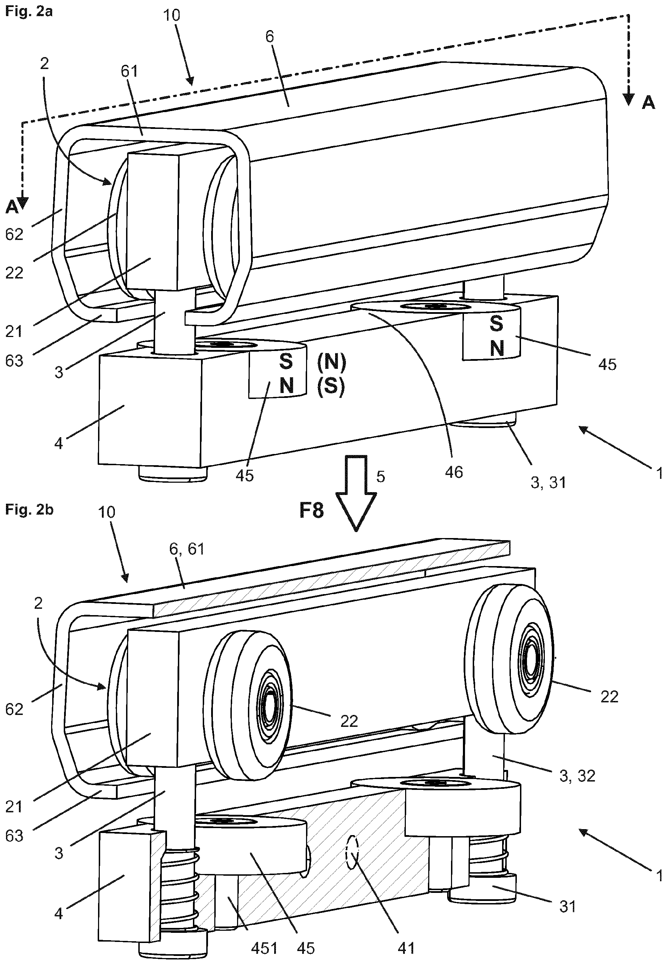

Fig. 1b zeigt die Aufhängevorrichtung 10' von Fig. 1a mit drei Aufnahmevorrichtungen 1A', 1B', 1C', von denen die erste Aufnahmevorrichtung 1A' eine Haltevorrichtung 5 in der Ausgestaltung eines Doppelhakens aufweist. Diese Haltevorrichtung 5 ist zudem mit einer langgestreckten Öse versehen, in die ein Zugseil eingehängt werden kann. Diese aus der CH706067A2 bekannte Aufhängevorrichtung 10'kann mit einfachen Massnahmen in eine erfindungsgemässe Aufhängevorrichtung 10 (siehe Fig. 2a) umgebaut werden, weshalb Fig. 1b nach der optisch kaum erkennbaren Modifikation eine erfindungsgemässe Aufhängevorrichtung 10 zeigt.

Fig. 1c zeigt das Laufwerk 2 von Fig. 1a, dessen Laufwerkskörper 21 an beiden Enden mit Radachsen 23 versehen ist, die beidseits des Haltekörpers 4' ein Rad oder eine Rolle 22 tragen. Der Laufwerkskörper 21 ist zudem mit zwei bolzenförmigen Verbindungselementen 3 bzw. Verbindungsbolzen 3 verbunden, entlang denen der Haltekörper 4', auf dem zwei Bremsklötze 45' angeordnet sind, gegen das Laufwerk 2 bzw. gegen die Unterseite der Laufschiene 6 verschiebbar ist. Die Verbindungsbolzen 3 sind im Haltekörper 4' in Führungskanälen oder Bohrungen 42 gehalten, in denen ein Federelement vorgesehen ist, welches den Haltekörper 4' nach oben drückt. Die Haltevorrichtung 5 (siehe Fig. 1b) wird mittels Schrauben montiert, die in Montagebohrungen 41 eingeführt werden. Sobald ein Transportgerät 8 in die Haltevorrichtung 4' eingehängt wird, werden die Federelemente komprimiert und der Haltekörper 4' wird nach unten gezogen, sodass sich die Bremsklötze 45' von der Führungsschiene 6 lösen und das Laufwerk 2 mit dem Transportgerät 8 verschoben werden kann.

Eingangs wurde beschrieben, dass diese Lösung mit verschiedenen Nachteilen behaftet ist. Die Bremsklötze 45' bestehen aus einem elastischen Material, normalerweise aus einem Kunststoff und sind somit einem Verschleiss ausgesetzt. Ferner können die Bremsklötze 45' verschmutzen, sodass keine optimale Bremswirkung eintritt und die Handhabung der Aufnahmevorrichtung 10' erschwert wird. Damit die Bremswirkung eintritt, ist eine entsprechende Federkraft des Federelements erforderlich. Sobald die Feder ermüdet, ist die erforderliche Bremsfunktion nicht mehr gegeben. Zu beachten ist ferner, dass Vorrichtungen in öffentlichen Räumen oft Vandalenakten ausgesetzt sind und somit gegen solche Einwirkungen geschützt werden müssen. Die freiliegenden elastischen Bremsklötze können daher einen kritischen Angriffspunkt für solche Einwirkungen bilden. Ferner können die Bremsklötze nach kurzer Zeit zerstört werden, falls entlang der Schiene 6 Hindernisse, wie Metallgräte, auftreten.

Bei der nachstehend beschriebene Erfindung kann auf die Verwendung der in der CH706067A2 offenbarten Bremsklötze vorteilhaft verzichtet werden.

Fig. 2a zeigt in einer vorzugsweisen Ausgestaltung ausschnittsweise die wesentlichen Elemente einer erfindungsgemässen Aufhängevorrichtung 10 mit einer von mehreren erfindungsgemässen Aufnahmevorrichtungen 1, die ein in einer Führungsschiene 6 geführtes Laufwerk 2 mit einem Laufwerkskörper 21 aufweist, der durch zwei Verbindungsbolzen 3 mit einem Haltekörper 4 verbunden ist, der von Federelementen 35 gestützt entlang den Verbindungsbolzen 3 verschiebbar ist und der an der Oberseite mit zwei Magneten 45 bestückt ist. Der Haltekörper 4 ist von der Führungsschiene 6 gelöst und wird durch die mit einem Transportgerät beladene Haltevorrichtung 5 mit einer Gewichtskraft F8 nach unten gezogen.

Durch Austausch des in Fig. 1c gezeigten vorbekannten Haltekörpers 4' mit dem in Fig. 2a gezeigten erfindungsgemässen Haltekörper 4 kann die aus den Figuren 1a und 1b bekannte Aufhängevorrichtung 10' in eine erfindungsgemässe Aufhängevorrichtung 10 umgebaut werden. Nach dem Einsatz der erfindungsgemässen Haltekörper 4, die mit Magneten 45 bestückt sind, zeigt Fig. 1b eine erfindungsgemässe Aufhängevorrichtung 10.

Fig. 2b zeigt die Aufhängevorrichtung 10 von Fig. 2a mit einem Schnitt durch die Führungsschiene 6 und den Haltekörper 4 entlang der Linie A-A.

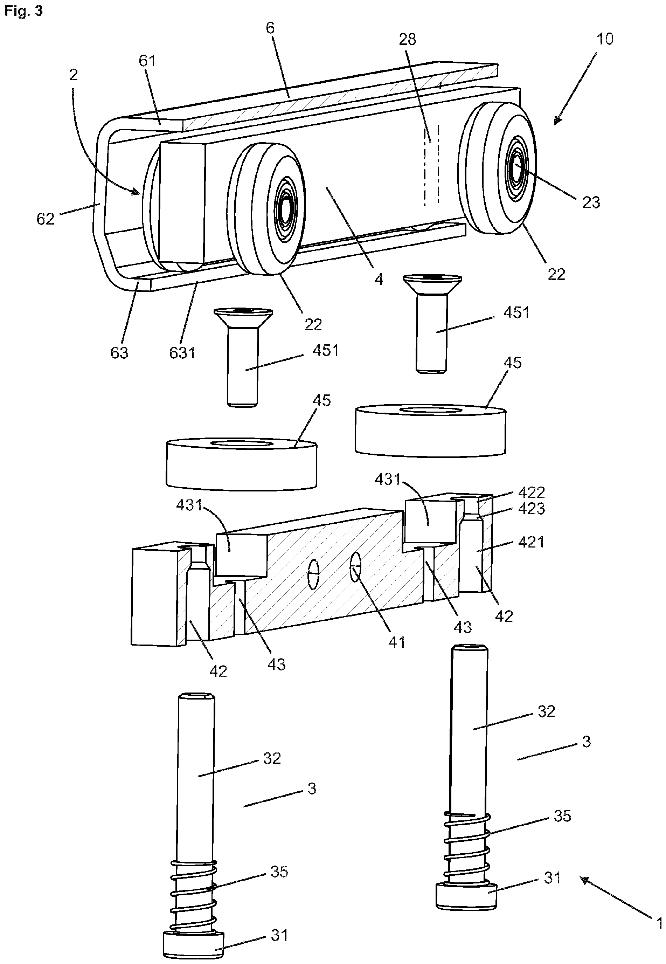

Fig. 3 zeigt die Aufhängevorrichtung 10 von Fig. 2a in Explosionsdarstellung.

Die Aufhängevorrichtung 10 umfasst eine z.B. an einer Decke, an Wänden oder an Metallprofilen befestigte Führungsschiene 6 aus Metall, die magnetisch gut leitend ist. Die Führungsschiene 6 weist ein nach unten geöffnetes U-Profil mit einem Mittelstück 61 und zwei Seitenwänden 62 auf, an deren unteren Enden gegeneinander gerichtete Schienenfüsse 63 vorgesehen sind, die einen Durchgangskanal begrenzen, durch den die Verbindungsbolzen 3 hindurchgeführt sind. Die Schienenfüsse 63 bilden die Unterseite 631 der Führungsschiene 6, an die die Magneten 45 des Haltekörpers 4 ankoppelbar sind.

Der Laufwagen 2 umfasst einen Laufwerkskörper 21 mit zwei Radachsen 23, die je beidseits des Laufwerkskörpers 21 mit einer Laufrolle bzw. einem Rad 22 bestückt sind, die auf Laufflächen an den Oberseiten der Schienenfüsse 63 abrollen können. Der Laufwerkskörper 21 weist zudem Gewindebohrungen 28 auf (siehe Fig. 3), die der Aufnahme des Bolzenschafts 32 je eines der Verbindungsbolzen 3 dienen. Auf dem Bolzenkopf 31 jedes Verbindungsbolzens 3 sitzt eine Schraubenfeder 35, die den Bolzenschaft 32 umschliesst. Die Verbindungsbolzen 3 werden im Haltekörper 4 durch Führungskanäle oder Bohrungen 42 hindurchgeführt, die eine untere Kammer 421 mit einem grösseren Durchmesser und eine obere Kammer 422 mit einem geringeren Durchmesser und zwischen der oberen und unteren Kammer 421, 422 eine ringförmige Schulter aufweisen. Nach dem Einsetzen der Verbindungsbolzen 3 liegen die Schraubenfedern 35 mit der Unterseite am Bolzenkopf 31 und mit der Oberseite an der Schulter 423 an. Die Schraubenfedern 35 sind derart bemessen, dass der nicht mit einem Transportgerät 8 verbundene Haltekörper 4 nach oben gegen die Führungsschiene 6 gedrückt wird und die Magneten 45 an die Unterseite 631 der Schienenfüsse 63 der Führungsschiene 6 ankoppeln können.

Die Magneten 45 sind zylinderförmig ausgebildet und an der Oberseite des Haltekörpers 4 in Ausnehmungen 431 eingesetzt, die vorzugsweise derart bemessen sind, dass in radialer Richtung ein Luftspalt zwischen den Magneten 45 und dem Haltekörper 4 verbleibt, der einen wesentlichen direkten Rückschluss der magnetischen Feldlinien verhindert und den fast vollständigen Verlauf der Feldlinien durch die angekoppelte Führungsschiene 6 bzw. die Schienenfüsse 63 bewirkt. Der Magnet 45 kann mit einem Pol somit am Haltekörper 4 anliegen und ansonsten freiliegen oder durch einen Luftspalt von weiteren Teilen des Haltekörpers (4) getrennt sein.

Sofern die Magneten 45 im Haltekörper 4 nicht selbsttätig gehalten sind, so können diese mittels Montageschrauben 451, die in Gewindebohrungen 43 eingreifen können, in den Ausnehmungen 431 fixiert werden. Die Ausnehmungen 431 sind derart bemessen, dass sie die Magneten 45 ganz oder teilweise aufnehmen können. In der gezeigten Ausgestaltung überragen die Magneten 45 den Haltekörper 4 auf beiden Seiten. Die Anzahl der Magneten und deren Abmessungen werden derart gewählt, dass eine gewünschte Kopplungskraft resultiert.

Die Magneten 45 und die Ausnehmungen 431 sind derart dimensioniert, dass die Oberseite der Magneten 45 und die Oberseite des Haltekörpers 4 zumindest annähernd in einer Ebene liegen und in der oberen Endlage des Haltekörpers 4 gemeinsam an der Unterseite 631 der Führungsschiene 6 anliegen können. Auf diese Weise wird ein optimaler Magnetfluss durch die angekoppelte Führungsschiene 6 bewirkt.

Zur wahlweisen Einstellung des Magnetflusses durch die Führungsschiene 6 kann der Magnet 45 in der Höhe justierbar angeordnet sein. Sofern der Magnet 45 mit dem Kopf der Montageschraube 451 fest verbunden ist, so kann der Magnet durch Drehen der Montageschraube 451 nach unten oder nach oben verschoben werden.

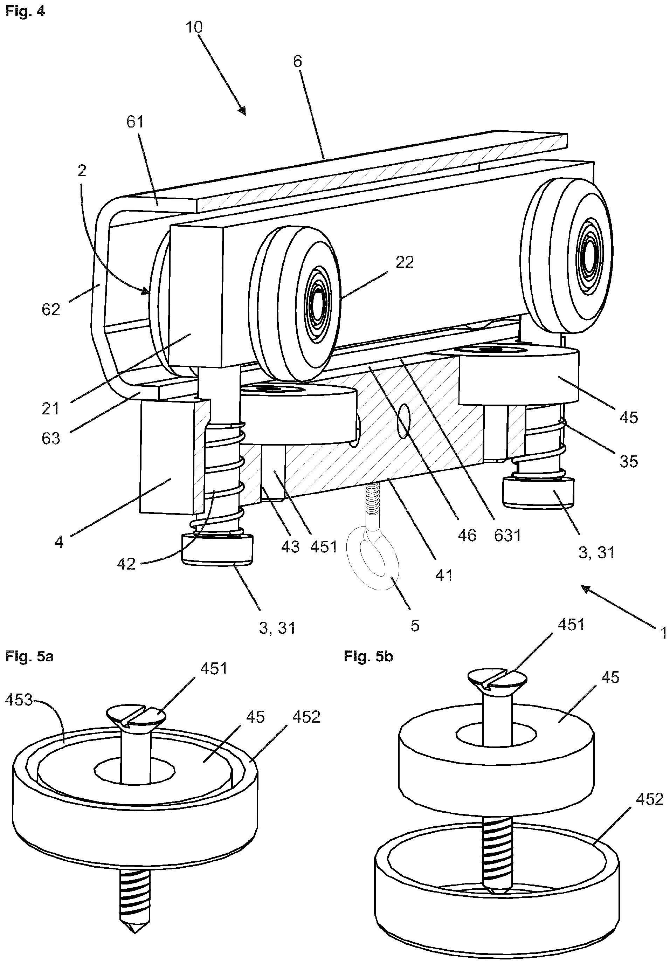

Die Magneten 45 sind vorzugsweise zylindrisch oder pillenförmig ausgebildet und können in dieser Ausgestaltung besonders vorteilhaft in den Haltekörper 4 integriert werden. In der gezeigten Ausgestaltung sind zwei identisch ausgebildete Magneten 45 symmetrisch auf dem Haltekörper 4 angeordnet. Die Magneten 45 können auch exzentrisch bzw. asymmetrisch angeordnet sein oder unterschiedliche Eigenschaften aufweisen, sodass die Kopplung zwischen dem Haltekörper 4 und der Führungsschiene 6 am ersten Ende des Haltekörpers 4 stärker ist als am zweiten Ende. Sofern eine Zugkraft auf das schwächer angekoppelte zweite Ende des Haltekörpers 4 einwirkt, kann der Haltekörper 4 leichter von der Führungsschiene 6 gelöst werden, obwohl er insgesamt mit hoher Magnetkraft an der Führungsschiene 6 anliegt. Die Haltevorrichtung 5 die in Fig. 4 in der Mitte des Haltekörpers 4 angeordnet ist, kann bei der oben beschriebenen Ausgestaltung auch am schwächer angekoppelten Ende des Haltekörpers 4 montiert werden, um das Lösen der Aufnahmevorrichtung 1 zu erleichtern.

In Fig. 2a ist illustriert, dass die Polarität der vertikal ausgerichteten Magneten 45 gleich oder invers sein kann. Bei inverser Ausrichtung der Magneten 45 verlaufen die Magnetfeldlinien durch beide Magneten 45, wodurch eine gleichmässigere Ankopplung des Haltekörpers 4 an die Führungsschiene 6 erzielt werden kann. Bei gleicher Ausrichtung der Magneten 45 umschliessen die Feldlinien nur die zugehörigen Magneten 45 und einen Anteil der Führungsschiene 6.

Fig. 4 zeigt die Aufhängevorrichtung 10 von Fig. 2a nach der Ankopplung des Haltekörpers 4 an die Führungsschiene 6. Es ist ersichtlich, dass die Oberseite 46 des Haltekörpers 4 und die Oberseite der Magneten 45 an der Unterseite 631 der Führungsschiene 6 bzw. der Schienenfüsse 63 anliegen. Die Oberseite 46 des Haltekörpers 4 und die Oberseite der Magneten 45 bilden in dieser bevorzugten Ausgestaltung eine Ebene. In alternativen Ausgestaltungen können die Magneten 45 die Oberseite 46 des Haltekörpers 4 auch überragen oder z.B. um den Bruchteil eines Millimeters oder mehr darin eingesenkt sein, damit ein mechanischer Kontakt zwischen den Magneten 45 und der Führungsschiene 6 vermieden wird. Die gegebenenfalls eingesenkten Magneten 45 werden vorzugsweise in eine Vergussmasse eingegossen und dadurch gegen eindringende Flüssigkeiten und Verschmutzungen geschützt.

Fig. 4 zeigt ferner, dass die Schraubenfedern 35 den Haltekörper 4 nach oben verschoben haben und daher weitgehend expandiert sind. Die Andruckkraft an die Führungsschiene 6 erfolgt dabei im Wesentlichen durch die Kraft der Magneten 45, weshalb die Schraubenfedern 35 keine grosse Kraft ausüben müssen und nur wenig belastet sind.

Sofern die Oberseite 46 des Haltekörpers 4 und die Oberseite der Magneten 45 und/oder die Unterseite 631 der Führungsschiene 6 eine ebene Fläche bilden, erfolgt eine kraftschlüssige Ankopplung. In vorzugsweisen Ausgestaltungen werden die Oberseite 46 des Haltekörpers 4 und/oder die Oberseite der Magneten 45 und die Unterseite 631 der Führungsschiene 6 mit zueinander komplementäre Formelementen, wie Rillen, Nuten, Ausnehmungen und Anforderungen, vorzugsweise Rasterungen versehen, die ineinander eingefügt formschlüssige Verbindungen bilden. Mit relativ geringer Magnetkraft kann dadurch ein seitliches Verschieben der nicht beladenen Aufnahmevorrichtungen 1 vermieden werden.

In einer weiteren vorzugsweisen Ausgestaltung sind die Oberseite 46 des Haltekörpers 4 und/oder die Unterseite 631 der Führungsschiene 6 mit einer Schicht, insbesondere einer Schutzschicht oder einer Dämpfungsschicht beaufschlagt. Diese Schichten sind vorzugsweise mit ferromagnetischen Materialien durchsetzt, sodass die magnetische Ankopplung nicht beeinträchtigt wird. Durch diese Schichten können die genannten Vorrichtungsteile gegen äussere Einwirkungen geschützt werden. Ferner können Geräuschemissionen reduziert werden.

Fig. 4 zeigt weiter, dass die mit dem Haltekörper 4 verbundene Haltevorrichtung 5 eine einfache Hakenschraube ist. Dadurch wird symbolisiert, dass Haltevorrichtungen 5 in unterschiedlichen Ausgestaltungen eingesetzt werden können.

Ferner ist es möglich, Haltevorrichtungen 5 in unterschiedlichen Ausgestaltungen vorzusehen, die wahlweise mit dem Haltekörper 4 verbunden werden können. Auf diese Weise kann ein Anwender eine an sein Transportgerät 8 angepasste Haltevorrichtung 5 auswählen und mit der nächsten Aufnahmevorrichtung 1A, 1B, 1C koppeln. In der erfindungsgemäss ausgestalteten Aufhängevorrichtung von Fig. 1B könnten dazu z.B. die Haken 5 der Aufnahmevorrichtungen 1B und 1C lösbar sein. Anstelle von Haken kann die Haltevorrichtung 5 auch Klemmvorrichtungen aufweisen.

Fig. 5a zeigt einen Magneten 45 von Fig. 2a, der innerhalb eines Metallbechers 452 angeordnet und derart dimensioniert ist, dass zwischen der Wand des Metallbechers 452 und dem Magneten 45 ein Luftspalt 453 verbleibt. Der Magnet 45 wird durch eine Montageschraube 451 im Metallbecher 452 konzentrisch gehalten, sodass der Luftspalt 453 über die gesamte Länge konstant ist. Durch die Verwendung des ferromagnetischen Metallbechers 452 wird sichergestellt, dass der magnetische Rückschluss über die angekoppelte Führungsschiene 6 und den Metallbecher 452 erfolgt.

Fig. 5b zeigt den Magneten 45 und den Metallbecher 452 von Fig. 5a in Explosionsdarstellung.

Erfindungsgemässe Aufhängevorrichtungen 10 sind vielseitig und somit nicht nur für die Lagerung von Transportgeräten oder Sportgeräten verwendbar. In mechanischen Werkstätten oder im Bereich der Verarbeitung von Lebensmitteln, z.B. in Metzgereien, in denen schwere Gegenstände manipuliert und verarbeitet werden, können solche Gegenstände mittels der erfindungsgemässen Aufhängevorrichtung 10 vorteilhaft gelagert und transportiert werden.

Die Führungsschiene 6 erfindungsgemässer Aufhängevorrichtungen 10 kann dabei gerade oder gekrümmt z.B. innerhalb einer Werkhalle, oder von einem ersten zu einem zweiten Raum verlaufen.

Erfindungsgemässe Aufhängevorrichtungen 10 können zudem mit einer weiteren Arretiervorrichtung versehen sein, die es erlaubt, eine beladene Aufhängevorrichtung 1 an wenigstens einer bestimmten Stelle entlang der Führungsschiene 6 zu fixieren. Z.B. ist im Haltekörper 4 ein vorzugsweise von einem Federelement gestützter Arretierbolzen verschiebbar gelagert, sodass er der Federkraft entgegenwirkend nach unten gezogen und z.B. mittels eines Bajonettverschlusses arretiert werden kann. Sobald die gewünschte Position entlang der Führungsschiene 6 erreicht ist, kann der Bajonettverschluss gelöst und der Arretierbolzen vom Federelement nach oben in eine von mehreren Ausnehmungen in der Führungsschiene 6 hinein verschoben werden, um eine formschlüssige Verbindung zwischen dem Haltekörper 4 und der Führungsschiene 6 zu erstellen.

## Patentansprüche

1. Aufhängevorrichtung (10) insbesondere für Transportgeräte (8) mit einer Führungsschiene (6), mittels der wenigstens eine Aufnahmevorrichtung (1) von einer Aufnahmeposition zu einer Parkposition verschiebbar gehalten ist, die ein in der Führungsschiene (6) verschiebbar gelagertes Laufwerk (2) mit einem Laufwerkskörper (21) aufweist, der durch wenigstens ein Verbindungselement (3) mit einem Haltekörper (4) verbunden ist, der entlang dem Verbindungselement (3) aus einer unteren Endlage gegen die Führungsschiene (6) in eine obere Endlage verschiebbar ist und der mit einer Haltevorrichtung (5) verbunden ist, die dem Halten des Transportgeräts (8) dient, **dadurch gekennzeichnet, dass** der Haltekörper (4) mit wenigstens einem Magneten (45) versehen ist, der in der oberen Endlage des Haltekörpers (4) mit der Führungsschiene (6) magnetisch gekoppelt ist.

2. Aufhängevorrichtung (10) nach Anspruch 1, **dadurch gekennzeichnet, dass** das Verbindungselement (3) eine Gewindestange oder ein Bolzen mit einem Bolzenschaft (32) und einem Bolzenkopf (31) ist, wobei die Gewindestange bzw. der Bolzenschaft (32) in einem Führungskanal (42) im Haltekörper (4) verschiebbar gehalten sind.

3. Aufhängevorrichtung (10) nach Anspruch 2, **dadurch gekennzeichnet, dass** im Führungskanal (42) ein Federelement (35), vorzugsweise eine Schraubenfeder, angeordnet ist, die einerseits am Verbindungselement (3) und andererseits am Haltekörper (4) anliegt und diesen gegen die Führungsschiene (6) drückt.

4. Aufhängevorrichtung (10) nach Anspruch 1, 2 oder 3, **dadurch gekennzeichnet, dass** der wenigstens eine Magnet (45) an der Oberseite (46) des Haltekörpers (4) sitzt oder dass der wenigstens eine Magnet (45) in einer Ausnehmung (431) im Haltekörper (4) gelagert ist, deren Abmessungen den Abmessungen des Magneten (45) oder einem Teil davon entsprechen.

5. Aufhängevorrichtung (10) nach einem der Ansprüche 1 - 4, **dadurch gekennzeichnet, dass** der Magnet (45) vorzugsweise derart dimensioniert und angeordnet ist, dass der Magnet (45) und/oder der die Oberseite (46) des Haltekörpers (4) in der oberen Endlage des Haltekörpers (4) an der Unterseite (631) der Führungsschiene (6) anliegt.

6. Aufhängevorrichtung (10) nach einem der Ansprüche 1 - 5, **dadurch gekennzeichnet, dass** der Magnet (45) in der Höhe justierbar ist.

7. Aufhängevorrichtung (10) nach einem der Ansprüche 1 - 6, **dadurch gekennzeichnet, dass** der Magnet (45) mit einem Pol am Haltekörper (4) anliegt und ansonsten freiliegt oder dass der Magnet (45) mit einem Pol am Haltekörper (4) anliegt und ansonsten durch einen Luftspalt von weiteren Teilen des Haltekörpers (4) getrennt ist.

8. Aufhängevorrichtung (10) nach einem der Ansprüche 1 - 7, **dadurch gekennzeichnet, dass** der Magnet (45) durch eine Schraube (451) mit dem Haltekörper (4) verbunden ist oder dass der Magnet (45) durch Magnetkraft oder einen Haftstoff in der Ausnehmung (431) des Haltekörpers (4) gehalten ist.

9. Aufhängevorrichtung (10) nach einem der Ansprüche 1 - 8, **dadurch gekennzeichnet, dass** der vorzugsweise zylindrisch oder pillenförmig ausgebildete Magnet (45) zentrisch oder exzentrisch am Haltekörper (4) angeordnet ist oder dass die vorzugsweise zylindrisch oder pillenförmig ausgebildeten Magneten (45) symmetrisch oder asymmetrisch am Haltekörper (4) angeordnet sind, und dass die Haltevorrichtung (5) zentrisch oder exzentrisch am Haltekörper (4) montiert ist.

10. Aufhängevorrichtung (10) nach einem der Ansprüche 1 - 9, **dadurch gekennzeichnet, dass** der oder die Magneten (45) vertikal ausgerichtet sind und/oder dass die Magneten (45) mit ihrer Polachse gleich oder invers ausgerichtet sind.

11. Aufhängevorrichtung (10) nach einem der Ansprüche 1 - 10, **dadurch gekennzeichnet, dass** die Oberseite (46) des Haltekörpers (4) und die Unterseite der Führungsschiene (6) zueinander komplementäre Formelemente aufweisen.

12. Aufhängevorrichtung (10) nach einem der Ansprüche 1 - 11, **dadurch gekennzeichnet, dass** die Oberseite (46) des Haltekörpers (4) und/oder die Unterseite der Führungsschiene (6) mit einer Schicht, insbesondere einer Schutzschicht oder einer Dämpfungsschicht, beaufschlagt sind.

13. Aufhängevorrichtung (10) nach einem der Ansprüche 1 - 12, **dadurch gekennzeichnet, dass** die Führungsschiene (6) ein L-Profil mit einem Schienenfuss (63) oder ein nach unten geöffnetes U-Profil mit gegeneinander gerichteten Schienenfüssen (63) aufweist, die einen Durchgangskanal zur Durchführung des wenigstens einen Verbindungselements (3) begrenzen, wobei der Schienenfuss (63) oder die Schienenfüsse (63) die Unterseite der Führungsschiene (6) bilden und dass der Laufwerkskörper (21) auf einer oder auf beiden Seiten mit einer oder mehreren Laufrollen (22) versehen ist, die je auf einem der Schienenfüsse (63) ruhen.

14. Aufhängevorrichtung (10) nach einem der Ansprüche 1 - 13, **dadurch gekennzeichnet, dass** der Laufwerkskörper (21) mit zwei voneinander beabstandeten Verbindungselementen (3) versehen ist, und dass der Haltekörper (4) mit zwei voneinander beabstandeten Magneten (45) versehen ist.

15. Aufhängevorrichtung (10) nach einem der Ansprüche 1 - 14, **dadurch gekennzeichnet, dass** die Haltevorrichtung (5) ein vorzugsweise hakenförmiges Aufnahmeteil oder eine Klemmvorrichtung umfasst.

## Claims

1. Suspension device (10) in particular for transport devices (8) with a guide rail (6), by means of which at least one receiving device (1) is held displaceably from a receiving position to a parking position, which receiving device (1) comprises a carriage (2), which is slidably supported in the guide rail (6) and which comprises carriage body (21), which is connected by at least one connecting element (3) to a holding body (4), which is displaceable along the connecting element (3) from a lower end position against the guide rail (6) into an upper end position and which is connected to a holding device (5), which serves to hold the transport device (8), **characterized in that** the holding body (4) is provided with at least one magnet (45), which, in the upper end position of the holding body (4), is magnetically coupled to the guide rail (6).

2. Suspension device (10) according to claim 1, **characterized in that** the connecting element (3) is a threaded rod or a bolt with a bolt shaft (32) and a bolt head (31), wherein the threaded rod or the bolt shaft (32), respectively, is displaceably held in a guide channel (42) in the holding body (4).

3. Suspension device (10) according to claim 2, **characterized in that** a spring element (35), preferably a helical spring, is arranged in the guide channel (42), which spring element (35) bears on the one hand against the connecting element (3) and on the other hand against the holding body (4) and presses the latter against the guide rail (6).

4. Suspension device (10) according to claim 1, 2 or 3, **characterized in that** the at least one magnet (45) is seated on the upper side (46) of the holding body (4) or **in that** the at least one magnet (45) is mounted in a recess (431) in the holding body (4), whose dimensions correspond to the dimensions of the magnet (45) or a part thereof.

5. Suspension device (10) according to one of the claims 1 - 4, **characterized in that** the magnet (45) is preferably dimensioned and arranged in such a way that the magnet (45) and/or the upper side (46) of the holding body (4) bears against the underside (631) of the guide rail (6) in the upper end position of the holding body (4).

6. Suspension device (10) according to one of the claims 1 - 5, **characterized in that** the magnet (45) is adjustable in height.

7. Suspension device (10) according to one of the claims 1 - 6, **characterized in that** the magnet (45) bears with one pole against the holding body (4) and is otherwise freely exposed or **in that** the magnet (45) bears with one pole against the holding body (4) and is otherwise separated from further parts of the holding body (4) by an air gap.

8. Suspension device (10) according to one of the claims 1 - 7, **characterized in that** the magnet (45) is connected to the holding body (4) by a screw (451) or **in that** the magnet (45) is held in the recess (431) of the holding body (4) by magnetic force or an adhesive.

9. Suspension device (10) according to one of the claims 1 - 8, **characterized in that** the magnet (45), which is preferably cylindrical or pill-shaped, is arranged centrally or eccentrically on the holding body (4), or **in that** the magnets (45), which are preferably cylindrical or pill-shaped, are arranged symmetrically or asymmetrically on the holding body (4), and **in that** the holding device (5) is mounted centrally or eccentrically on the holding body (4).

10. Suspension device (10) according to one of the claims 1 - 9, **characterized in that** the magnet or the magnets (45) are vertically aligned and/or **in that** the magnets (45) are aligned with their polar axis in the same or inverse manner.

11. Suspension device (10) according to one of the claims 1 - 10, **characterized in that** the upper side (46) of the holding body (4) and the lower side of the guide rail (6) have shape elements which are complementary to one another.

12. Suspension device (10) according to one of the claims 1 - 11, **characterized in that** a layer, in particular a protective layer or a damping layer, is applied to the upper side (46) of the holding body (4) and/or the underside of the guide rail (6).

13. Suspension device (10) according to one of the claims 1 - 12, **characterized in that** the guide rail (6) has an L-profile with a rail foot (63) or a downwardly opened U-profile with rail feet (63) directed towards one another, which limit a passage channel for the passage of the at least one connecting element (3), wherein the rail foot (63) or the rail feet (63) form the lower side of the guide rail (6), and **in that** the carriage body (21) is provided on one or both sides with one or more running rollers (22) which each rest on one of the rail feet (63).

14. Suspension device (10) according to one of the claims 1 - 13, **characterized in that** the carriage body (21) is provided with two connecting elements (3) spaced apart from one another, and **in that** the holding body (4) is provided with two magnets (45) spaced apart from one another.

15. Suspension device (10) according to one of the claims 1 - 14, **characterized in that** he holding device (5) comprises a preferably hook-shaped receiving part or a clamping device.

## Revendications

1. Dispositif de suspension (10), en particulier pour des dispositifs de transport (8) avec un rail de guidage (6), au moyen duquel au moins un dispositif de réception (1) est maintenu de manière déplaçable d'une position de réception à une position de stationnement, lequel dispositif de réception (1) comprend un chariot (2), qui est monté coulissant dans le rail de guidage (6) et qui comprend un corps de chariot (21), qui est relié par au moins un élément de liaison (3) à un corps de maintien (4), qui peut être déplacé le long de l'élément de liaison (3) d'une position d'extrémité inférieure contre le rail de guidage (6) dans une position d'extrémité supérieure et qui est relié à un dispositif de maintien (5) servant à maintenir le dispositif de transport (8), **caractérisé en ce que** le corps de maintien (4) est pourvu d'au moins un aimant (45) qui est couplé magnétiquement au rail de guidage (6) dans la position d'extrémité supérieure du corps de maintien (4).

2. Dispositif de suspension (10) selon la revendication 1, **caractérisé en ce que** l'élément de liaison (3) est une tige filetée ou un boulon avec un arbre de boulon (32) et une tête de boulon (31), la tige filetée ou l'arbre de boulon (32) étant maintenu de manière mobile dans un canal de guidage (42) du corps de maintien (4).

3. Dispositif de suspension (10) selon la revendication 2, **caractérisé en ce que** qu'un élément de ressort (35), de préférence un ressort hélicoïdal, est disposé dans le canal de guidage (42), lequel élément de ressort (35) repose d'une part contre l'élément de liaison (3) et d'autre part contre le corps de maintien (4) et presse ce dernier contre le rail de guidage (6).

4. Dispositif de suspension (10) selon la revendication 1, 2 ou 3, **caractérisé en ce que** l'au moins un aimant (45) est placé sur la face supérieure (46) du corps de maintien (4) ou **en ce que** l'au moins un aimant (45) est monté dans un évidement (431) du corps de maintien (4), dont les dimensions correspondent aux dimensions de l'aimant (45) ou d'une partie de celui-ci.

5. Dispositif de suspension (10) selon une des revendications 1 - 4, **caractérisé en ce que** l'aimant (45) est de préférence dimensionné et disposé de telle sorte que l'aimant (45) et/ou la face supérieure (46) du corps de maintien (4) repose contre la face inférieure (631) du rail de guidage (6) dans la position extrême supérieure du corps de maintien (4).

6. Dispositif de suspension (10) selon une des revendications 1 - 5, **caractérisé en ce que** l'aimant (45) est réglable en hauteur.

7. Dispositif de suspension (10) selon une des revendications 1 - 6, **caractérisé en ce que** l'aimant (45) s'applique avec un pôle contre le corps de maintien (4) et est autrement exposé ou **en ce que** l'aimant (45) s'applique avec un pôle contre le corps de maintien (4) et est autrement séparé des autres parties du corps de maintien (4) par un entrefer.

8. Dispositif de suspension (10) selon une des revendications 1 - 7, **caractérisé en ce que** l'aimant (45) est relié au corps de maintien (4) par une vis (451) ou **en ce que** l'aimant (45) est maintenu dans l'évidement (431) du corps de maintien (4) par force magnétique ou adhésif.

9. Dispositif de suspension (10) selon une des revendications 1 - 8, **caractérisé en ce que** l'aimant (45), de préférence cylindrique ou en forme de pilule, est disposé de manière centrale ou excentrique sur le corps de maintien (4), ou **en ce que** les aimants (45), de préférence cylindriques ou en forme de pilule, sont disposés de manière symétrique ou asymétrique sur le corps de maintien (4) et que le dispositif de maintien (5) est fixé de façon centrale ou excentrique au corps de maintien (4).

10. Dispositif de suspension (10) selon une des revendications 1 - 9, **caractérisé en ce que** l'aimant ou les aimants (45) sont alignés verticalement et/ou **en ce que** les aimants (45) sont alignés de manière identique ou inverse avec leur axe polaire.

11. Dispositif de suspension (10) selon une des revendications 1 - 10, **caractérisé en ce que** la face supérieure (46) du corps de maintien (4) et la face inférieure du rail de guidage (6) présentent des éléments de forme complémentaires entre eux.

12. Dispositif de suspension (10) selon une des revendications 1 - 11, **caractérisé en ce qu'**une couche, en particulier une couche de protection ou une couche d'amortissement, est appliquée sur la face supérieure (46) du corps de maintien (4) et/ou la face inférieure du rail de guidage (6).

13. Dispositif de suspension (10) selon une des revendications 1 - 12, **caractérisé en ce que** le rail de guidage (6) présente un profilé en L avec un pied de rail (63) ou un profilé en U ouvert vers le bas avec des pieds de rail (63) dirigés les uns vers les autres, qui limitent un canal de passage pour le passage du au moins un élément de liaison (3), le pied de rail (63) ou les pieds de rail (63) formant la face inférieure du rail de guidage (6), et **en ce que** le corps de chariot (21) est muni sur un ou les deux côtés d'un ou plusieurs galets de roulement (22) qui reposent chacun sur un des pieds de rail (63).

14. Dispositif de suspension (10) selon une des revendications 1 - 13, **caractérisé en ce que** le corps de chariot (21) est muni de deux éléments de liaison (3) espacés l'un de l'autre, et **en ce que** le corps de maintien (4) est muni de deux aimants (45) espacés l'un de l'autre.

15. Dispositif de suspension (10) selon une des revendications 1 - 14, **caractérisé en ce que** le dispositif de maintien (5) comprend une pièce de réception de préférence en forme de crochet ou un dispositif de serrage.
